(19) Europäisches Patentamt
European Patent Office
Office européen des brevets

(11) **EP 2 051 121 A2**

(12) **EUROPEAN PATENT APPLICATION**

(43) Date of publication:
**22.04.2009 Bulletin 2009/17**

(51) Int Cl.:
**G02B 13/00** (2006.01)  **G02B 9/14** (2006.01)
**G02B 13/18** (2006.01)

(21) Application number: **08252951.2**

(22) Date of filing: **04.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **18.10.2007 JP 2007271349**

(71) Applicant: **Sony Corporation**
**Tokyo 108-0075 (JP)**

(72) Inventor: **Nakanishi, Hitoshi**
**c/o Sony Corporation**
**Tokyo (JP)**

(74) Representative: **Scaddan, Gareth Casey**
**D Young & Co**
**120 Holborn**
**London EC1N 2DY (GB)**

(54) **Imaging lens and imaging device**

(57)    An imaging lens includes, from an object side, a first lens formed by a positive lens that is convex on the object side, an aperture stop, a second lens formed by a negative lens that is convex on an image side, a third lens formed by a positive lens that is concave on the image side, and an infrared cut filter. Surfaces of the first, second, and third lenses are aspherical. The imaging lens has an angle of view of 64° or more, and satisfies the following conditional expressions A0 to A3:

$$0.2 < R1/R2 < 0.35 \qquad (A0)$$

$$-1.2 < R1/R5 < -1.5 \qquad (A1)$$

$$0.002 < |D4/f2| < 0.01 \qquad (A2)$$

$$0.06f < Z0.50 - Z0.35 < 0.08f \qquad (A3)$$

where f represents the focal length of the entire system, f2 represents the focal length of the second lens, R1 and R2 represent the paraxial radii of curvature of an object-side surface and an image-side surface of the first lens, respectively, R5 represents the paraxial radius of curvature of an image-side surface of the second lens, D4 represents the thickness of the second lens, and Z0.50 and Z0.35 represent the sag amounts of an image-side surface of the third lens at a ray height of 0.50 and a ray height of 0.35, respectively, with respect to a ray height of 1.0 indicating the maximum ray height provided when the angle of view is 64°.

EP 2 051 121 A2

# FIG. 1

**Description**

**Field of the Invention**

The present invention relates to imaging lenses and imaging devices. More particularly, embodiments of the present invention relate to a small imaging lens for suitable use in a digital input apparatus (for example, a digital still camera or a digital video camera) in which a picture of a subject is captured by a solid-state image pickup element, and relates to an imaging device using the imaging lens.

**Background of the Invention**

With popularization of personal computers, digital still cameras, digital video cameras, and camera modules for mobile telephones (hereinafter simply referred to as "digital cameras"), which can easily take image information into a digital apparatus, are becoming widespread on the individual user level. These digital cameras are expected to become increasingly widespread as image information input apparatuses.

Size reduction of solid-state image pickup elements, such as CCDs (Charge Coupled Devices) and CMOSs (Complementary Metal-Oxide Semiconductors), mounted in digital cameras has advanced. With this, digital cameras having a smaller size and a wider angle of view have been demanded. For this reason, there is a strong demand to reduce the size of an imaging lens that takes the largest share of the capacity of the digital input apparatus. It is the easiest method for reducing the size of the imaging lens to reduce the size of a solid-state image pickup element. For that purpose, however, it is necessary to reduce the size of a light-receiving element. This raises the level of difficulty in manufacturing the solid-state image pickup element, and increases the performance necessary for the imaging lens. Moreover, there is a strong demand for wideangle image capturing, and lenses with little distortion are demanded.

In contrast, if the size of the imaging lens is reduced without changing the size of the solid-state image pickup element, the position of the exit pupil becomes closer to the image plane. When the position of the exit pupil becomes closer to the image plane, off-axis rays emitted from the imaging lens obliquely enter the image plane. As a result, microlenses provided at the front of the solid-state image pickup element do not sufficiently collect light, and the brightness of an image is extremely different between the center portion and the peripheral portion of the image. If the exit pupil of the imaging lens is placed far away in order to solve this problem, the total size of the imaging lens increases.

In addition, there is an increasing demand to reduce the cost of imaging lenses because of recent competition for lower prices.

In order to meet the above-described demands, imaging lens assemblies each including three lenses have been proposed in Japanese Unexamined Patent Application Publication Nos. 2001-272598, 2005-24823, and 2005-258181.

**Summary of the Invention**

Various respective aspects and features of the invention are defined in the appended claims. Combinations of features from the dependent claims may be combined with features of the independent claims as appropriate and not merely as explicitly set out in the claims.

In Japanese Unexamined Patent Application Publication No. 2001-272598, the total length of the imaging lens assembly is about three times the focal length, and therefore, size reduction is not achieved.

While the imaging lens assembly disclosed in Japanese Unexamined Patent Application Publication No. 2005-24823 is compact, the degree of flexibility in shape of a first lens formed of glass is low, and an object-side surface of the first lens is concave. Therefore, it is difficult both to obtain a wide angle of view and to properly correct distortion.

In the imaging lens assembly disclosed in Japanese Unexamined Patent Application Publication No. 2005-258181, since the power of a second lens is strong, size reduction can be achieved. However, the eccentric sensitivity during assembling increases.

Accordingly, it is desirable to provide a small imaging lens for a solid-state image pickup element, which has a wide angle of view, is properly corrected for distortion, and has high productivity, and to provide an imaging device including the imaging lens.

An imaging lens according to an embodiment of the present invention includes three resin lenses configured to form an image in a solid-state image pickup element; an aperture stop; and one infrared cut filter formed of resin. The three resin lenses include a first lens formed by a positive lens that is convex on an object side, a second lens formed by a negative lens that is convex on an image side, and a third lens formed by a positive lens that is concave on the image side. The first lens, the aperture stop, the second lens, and the third lens, and the infrared cut filter are arranged in that order from the object side. Surfaces of the first lens, the second lens, and the third lens are aspherical. The imaging lens has an angle of view of 64° or more, and satisfies the following conditional expressions A0 to A3:

$$0.2 < R1/R2 < 0.35 \qquad (A0)$$

$$-1.2 < R1/R5 < -1.5 \qquad (A1)$$

$$0.002 < |D4/f2| < 0.01 \qquad (A2)$$

$$0.06f < Z0.50-Z0.35 < 0.08f \qquad (A3)$$

where f represents the focal length of the entire system, f2 represents the focal length of the second lens, R1 represents the paraxial radius of curvature of an object-side surface of the first lens, R2 represents the paraxial radius of curvature of an image-side surface of the first lens, R5 represents the paraxial radius of curvature of an image-side surface of the second lens, D4 represents the thickness of the second lens, Z0.50 represents the sag amount of an image-side surface of the third lens at a ray height of 0.50 with respect to a ray height of 1.0 indicating the maximum ray height provided when the angle of view is 64°, and Z0.35 represents the sag amount of the image-side surface of the third lens at a ray height of 0.35 with respect to the ray height of 1.0 indicating the maximum ray height provided when the angle of view is 64°.

An imaging device according to another embodiment of the present invention includes the imaging lens according to the embodiment of the present invention; and an image pickup element configured to convert an optical image formed by the imaging lens into electric signals.

According to the embodiments of the present invention, a wide angle of view is achieved, distortion is properly corrected, productivity is improved, and size reduction is achieved.

## Brief Description of the Drawings

Embodiments of the invention will now be described with reference to the accompanying drawings, throughout which like parts are referred to by like references, and in which:

Fig. 1 shows a lens configuration of an imaging lens according to a first embodiment of the present invention;
Fig. 2 includes aberration diagrams (spherical aberration, astigmatism, and distortion) in a first numerical example in which specific numerical values are applied to the first embodiment;
Fig. 3 shows a lens configuration of an imaging lens according to a second embodiment of the present invention;
Fig. 4 includes aberration diagrams (spherical aberration, astigmatism, and distortion) in a second numerical example in which specific numerical values are applied to the second embodiment;
Fig. 5 is a perspective view of a mobile telephone including a camera unit to which an imaging device according to an embodiment of the present invention is applied, in conjunction with Figs. 6 and 7, and shows a non-use state or a standby state of the mobile telephone 7;
Fig. 6 is a perspective view showing a use state of the mobile telephone; and
Fig. 7 is a block diagram showing an internal configuration of the mobile telephone.

## Description of the Example Embodiments

Example embodiments for carrying out an imaging lens and an imaging device according to the present invention will be described below with reference to the drawings.

First, an imaging lens will be described.

An imaging lens according to an embodiment of the present invention includes three resin lenses for forming an image in a solid-state image pickup element, and one infrared cut filter formed of resin. The three resin lenses include a first lens formed by a positive lens that is convex on an object side, a second lens formed by a negative lens that is convex on an image side, and a third lens formed by a positive lens that is concave on the image side. The first lens, an aperture stop, the second lens, the third lens, and the infrared cut filter are arranged in that order from the object side to the image side. Surfaces of the first lens, the second lens, and the third lens are aspherical, the angle of view is 64° or more, and the following conditional expressions A0 to A3 are satisfied:

$$0.2 < R1/R2 < 0.35 \tag{A0}$$

$$-1.2 < R1/R5 < -1.5 \tag{A1}$$

$$0.002 < |D4/f2| < 0.01 \tag{A2}$$

$$0.06f < Z0.50-Z0.35 < 0.08f \tag{A3}$$

where f represents the focal length of the entire system, f2 represents the focal length of the second lens, R1 represents the paraxial radius of curvature of an object-side surface of the first lens, R2 represents the paraxial radius of curvature of an image-side surface of the first lens, R5 represents the paraxial radius of curvature of an image-side surface of the second lens, D4 represents the thickness of the second lens, Z0.50 represents the sag amount of an image-side surface of the third lens at a ray height of 0.50 with respect to a ray height of 1.0 indicating the maximum ray height provided when the angle of view is 64°, and Z0.35 represents the sag amount of the image-side surface of the third lens at a ray height of 0.35 with respect to the ray height of 1.0 indicating the maximum ray height provided when the angle of view is 64°.

Positive, negative, and positive refractive powers are provided in order from the object side, and the aperture stop is provided between the first lens and the second lens. Therefore, it is possible to provide a single focus lens having three lenses which can have a wide angle of view and high optical performance. This configuration ensures a long distance from the imaging position to the exit pupil. This means that the angle formed by the optical axis and the principal ray of each light beam emitted from the final surface of the lens system is small. As a result, the incident angle on the solid-state image pickup element is prevented from becoming sharp, and high optical performance is obtained.

While the imaging lens according to the embodiment of the present invention has an inexpensive and simple lens configuration including only three lenses, it can properly correct aberrations and achieve high performance, since the surfaces of the lenses are aspherical, and the power is appropriately distributed to the lenses.

The first lens corrects coma aberration, which is caused by increasing the angle of view, by both aspherical surfaces thereof. An image-side aspherical surface of the first lens and an object-side aspherical surface of the second lens correct spherical aberration, and minimize coma aberration. Both aspherical surfaces of the third lens correct distortion and curvature of field.

Since the aperture stop is provided between the first lens and the second lens, the distance from the first lens to the third lens including the aperture stop is not long. Therefore, automatic focusing can be performed by increasing and decreasing the gap between the third lens and the image pickup element so that the first lens, the aperture stop, the second lens, and the third lens move together on the optical axis.

Conditional Expression A0 described above specifies the surface shape of the first lens. By setting the value to be less than the upper limit of Conditional Expression A0, the total optical length of the imaging lens is reduced, and a wide angle of view is maintained. On the other hands, by setting the value to be more than the lower limit, the refractive index of the first lens is prevented from becoming too high, high-order coma aberration is suppressed, and correction of spherical aberration and distortion is facilitated.

Conditional Expression A1 described above specifies the aberration correcting condition of the first lens and the second lens. By setting the value to be less than the upper limit of Conditional Expression A1, the necessary effective diameter of the second lens can be reduced, and coma aberration can be suppressed. On the other hand, by setting the value to be more than the lower limit, a negative refractive index can be maintained.

Conditional Expression A2 described above specifies the negative refractive power and shape of the second lens. By setting the value to be more than the lower limit of Conditional Expression A2, the negative refractive power can be reduced, and the eccentric sensitivity between the second lens and the first lens can be reduced. Moreover, a space where the aperture stop is provided can be ensured between the first lens and the second lens. On the other hand, by setting the value to be less than the upper limit, the total length can be kept short, and the incident angle of the ray on the image-pickup element can be limited.

Conditional Expression A3 described above specifies the aspherical surface shape of the third lens. By setting the value to be more than the lower limit of Conditional Expression A3, distortion can be corrected, and curvature of field can be reduced. Moreover, the incident angle on the image pickup element can be reduced, and the change in angle due to the image height can be reduced. On the other hand, by setting the value to be less than the upper limit, coma aberration can be prevented, and the thickness of a peripheral portion of the third lens can be ensured. Moreover, shape unevenness can be reduced when molding the resin lenses.

It is preferable that the imaging lens according to the embodiment of the present invention satisfy the following Conditional Expressions A4 and A5:

$$0.05 < f/f3 < 0.1 \tag{A4}$$

$$0.97 < D77/D73 < 1.03 \tag{A5}$$

where f3 represents the focal length of the third lens, D73 represents the lens thickness at a ray height of 0.30 with respect to a ray height of 1.0 indicating the ray height at the image-side surface of the third lens when the angle of view of a ray incident on the first lens is 64°, and D77 represents the lens thickness at a ray height of 0.70 with respect to the ray height of 1.0 indicating the ray height at the image-side surface of the third lens when the angle of view of the ray incident on the first lens is 64°.

Conditional Expression A4 described above specifies the characteristics of distortion and curvature of field, and the sensitivity during manufacturing. By setting the value to be less than the upper limit of Conditional Expression A4, the sensitivity of the image plane performance to decentering and eccentricity during manufacturing can be reduced. On the other hand, the positive refractive index can be maintained by setting the value to be more than the lower limit.

By setting the value to be less than the upper limit of Conditional Expression A5, the incident angle of a light beam on the image-pickup element can be reduced, and reduction in amount of light incident on the image pickup element due to an increase in the incident angle can be suppressed. By setting the value to be more than the lower limit, curvature of field can be corrected.

Descriptions will now be given of imaging lenses according to specific embodiments of the present invention and numerical examples in which specific numerical values are applied to the embodiments, with reference to the drawings and tables.

In the embodiments, aspherical surfaces are adopted. The aspherical surface shape is defined by the following expression:

$$Z = \frac{CY^2}{1+\sqrt{1-(1+K)C^2Y^2}} + (A4)Y^4 + (A6)Y^6 + (A8)Y^8 + \cdots\cdot(An)Y^n$$

where Z represents the depth of the aspherical surface (sag amount), Y represents the height from the optical axis, C represents the paraxial radius of curvature, K is a conic constant, and An represents the n-order aspherical coefficient.

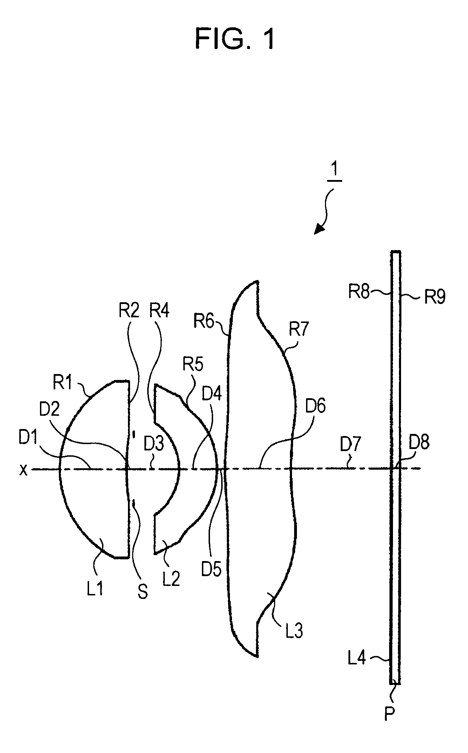

Fig. 1 shows a lens configuration of an imaging lens 1 according to a first embodiment of the present invention. In the imaging lens 1, a first lens L1, an aperture stop S, a second lens L2, a third lens L3, and an infrared cut filter L4 are arranged in that order from the object side. The first lens L1 is formed by a resin meniscus lens having a convex surface on the object side and having a positive refractive power. The aperture stop S is formed of resin. The second lens L2 is formed by a resin negative lens having a concave surface on the object side. The third lens L3 is formed by a resin positive lens having a convex surface on the object side. The infrared cut filter L4 is formed of resin. All surfaces of the first lens L1, the second lens L2, and the third lens L3 are aspherical.

Table 1 shows lens data on a first numerical example in which specific numerical values are applied to the imaging lens 1 according to the first embodiment, together with the focal length f, the f-number Fno, and the angle of view 2ω. In Table 1 and other tables showing lens data, the number (1, 2, ..., n) in the leftmost column represents the order number of the n-th surface from the object side, R represents the paraxial radius of curvature, D represents the on-axis surface distance between the n-th surface and the n+1-th surface, Nd represents the refractive index of the n-th surface for the d-line (wavelength = 587.6 nm (nanometers)), and vd represents the Abbe number of the n-th surface for the d-line.

Table 1

| | | R | D | Nd | ν d |
|---|---|---|---|---|---|
| | f=1 Fno 3. 2 2ω=66.7 | | | | |
| | 1 | 0.3516 | 0.2344 | 1.5299 | 55.8 |
| | 2 | 1.0649 | 0.0231 | | |
| | 3 (Stop) | | 0.1645 | | |
| | 4 | -0.2097 | 0.1381 | 1.5855 | 29.9 |
| | 5 | -0.2678 | 0.0286 | | |
| | 6 | 0.8193 | 0.2393 | 1.5299 | 55.8 |
| | 7 | 0.8196 | 0.3564 | | |
| | 8 | | 0.0286 | 1.53 | 60 |
| | 9 | | 0 | | |

Both surfaces (R1, R2) of the first lens L1, both surfaces (R4, R5) of the second lens L2, and both surfaces (R6, R7) of the third lens L3 are aspherical. Accordingly, Table 2 shows the 4-, 6-, 8-, and 10-order aspherical coefficients A4, A6, A8, and A10 of each surface (and the 12-, 14-, 16-, and 18-order aspherical coefficients A12, A14, A16, and A18 of the fifth surface (R5)) in the first numerical example. In Table 2 and the following tables showing the aspherical coefficients, "E+i" represents the exponent based on 10, that is, represents $10^i$. For example, "0.12345E+05" represents "$0.12345 \times 10^5$".

Table 2

| Surface No. | K | A 4 | A 6 | A 8 | A 1 0 |
|---|---|---|---|---|---|
| 1 | -0.8862 | 2.32953E+00 | 1.96357E+01 | -5.33225E+01 | -3.51431E+02 |
| 2 | 14.60751 | -1.30429E+00 | -1.85180E+02 | 5.83921E+03 | -7.33090E+04 |
| 4 | -0.78427 | 1.90729E+00 | -9.90745E+02 | 2.62831E+04 | -4.30977E+05 |
| 5 | -0.25061 | 2.47106E+00 | -2.01335E+02 | 1.07755E+04 | -2.75066E+05 |
| 6 | -31.9396 | -4.76122E+00 | 3.64175E+01 | -1.15028E+02 | 1.46188E+02 |
| 7 | -28.7827 | -3.68305E+00 | 8.08735E+00 | -2.22693E+01 | 4.34421E+01 |
| | | A 1 2 | A14 | A16 | A 1 8 |
| 5 | | 3.49365E+06 | 7.12504E+06 | -5.13898E+08 | 3.08857E+09 |

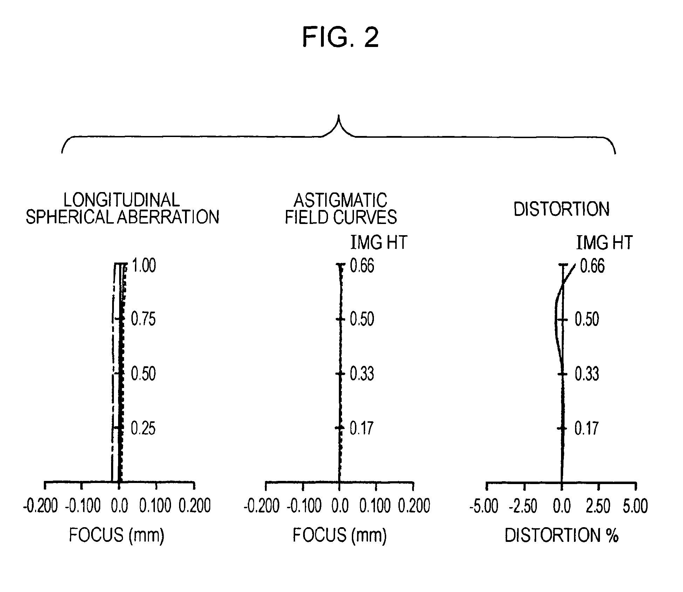

Fig. 2 shows aberrations (spherical aberration, astigmatism, and distortion) in the first numerical example. The aberrations are provided for the d-line. In a diagram of spherical aberration, the solid line shows the d-line, the broken line shows the C-line (wavelength = 656.3 nm), the one-dot chain line shows the g-line (wavelength = 435.8 nm). In a diagram of astigmatism, the solid line and the broken line show aberration for a sagittal image plane and aberration for a tangential image plane, respectively.

As is evident from the above tables and aberration diagrams, a compact size and a wide angle of view of 64° or more are achieved and the aberrations are properly corrected in the first numerical example.

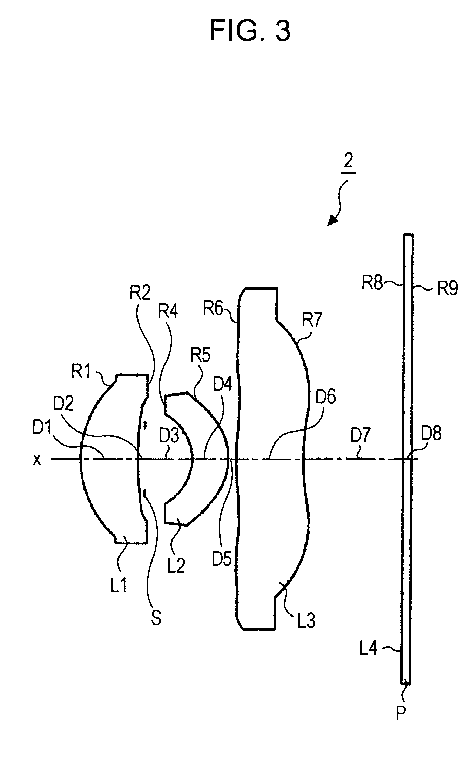

Fig. 3 shows a lens configuration of an imaging lens 2 according to a second embodiment of the present invention. In the imaging lens 2, a first lens L1, an aperture stop S, a second lens L2, a third lens L3, and an infrared cut filter L4 are arranged in that order from the object side. The first lens L1 is formed by a resin meniscus lens having a convex surface on the object side and having a positive refractive power. The aperture stop S is formed of resin. The second lens L2 is formed by a resin negative lens having a concave surface on the object side. The third lens L3 is formed by a resin positive lens having a convex surface on the object side. The infrared cut filter L4 is formed of resin. All surfaces of the first lens L1, the second lens L2, and the third lens L3 are aspherical.

Table 3 shows lens data on a second numerical example in which specific numerical values are applied to the imaging lens 2 according to the second embodiment, together with the focal length f, the f-number Fno, and the angle of view 2ω.

Table 3

| | | R | D | Nd | ν d |
|---|---|---|---|---|---|
| f=1 Fno 3. 2 2ω=71.5 | | | | | |
| | | R | D | Nd | ν d |
| 1 | | 0.3787 | 0.2166 | 1.5299 | 55.8 |
| 2 | | 1.3436 | 0.0219 | | |
| 3 (Stop) | | | 0.1799 | | |
| 4 | | -0.2076 | 0.1391 | 1.5855 | 29.9 |
| 5 | | -0.2611 | 0.0313 | | |
| 6 | | 0.8118 | 0.2581 | 1.5299 | 55.8 |
| 7 | | 0.8121 | 0.3720 | | |
| 8 | | | 0.0313 | 1.53 | 60 |
| 9 | | | 0 | | |

Both surfaces (R1, R2) of the first lens L1, both surfaces (R4, R5) of the second lens L2, and both surfaces (R6, R7) of the third lens L3 are aspherical. Accordingly, Table 4 shows the 4-, 6-, 8-, and 10-order aspherical coefficients A4, A6, A8, and A10 of each surface (and the 12-, 14-, 16-, and 18-order aspherical coefficients A12, A14, A16, and A18 of the fifth surface (R5)) in the second numerical example.

Table 4

| Surface No. | K | A 4 | A 6 | A 8 | A 1 0 |
|---|---|---|---|---|---|
| 1 | -0.8862 | 0.179877E+01 | 0.218679E+01 | 0.397549E+02 | -0.288437E+04 |
| 2 | 14.60751 | -0.227924E+01 | -0.167174E+03 | 0.316577E+04 | 0.797266E+04 |
| 4 | -0.78427 | -0.471355E+00 | -0.111043E+04 | 0.205598E+05 | -0.308346E+06 |
| 5 | -0.25061 | 0.131533E+01 | -0.317549E+03 | 0.119445E+05 | -0.224059E+06 |
| 6 | -31.9396 | -0.563275E+01 | 0.366394E+02 | -0.953313E+02 | 0.897356E+02 |
| 7 | -28.7827 | -0.298839E+01 | 0.302882E+01 | -0.275002E+01 | 0.560885E+01 |
| | | A12 | A14 | A16 | A18 |
| 5 | | 0.152999E+07 | 0.796461E+07 | 0.667493E+08 | -0.175585E+10 |

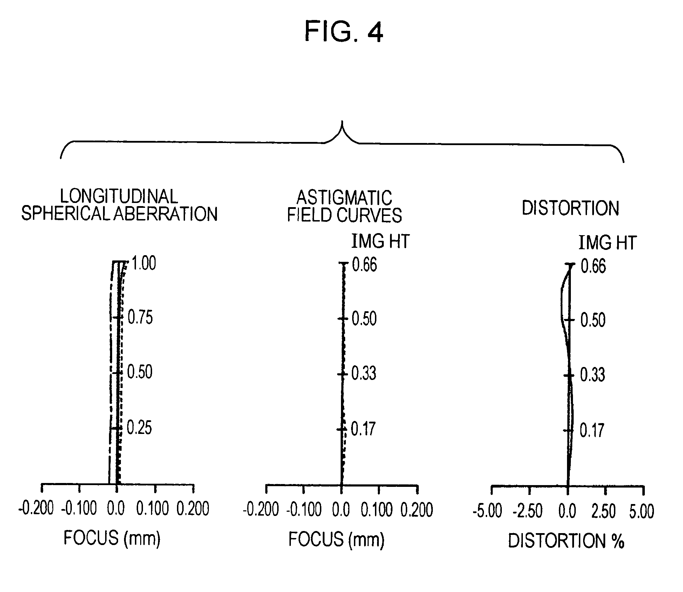

Fig. 4 shows aberrations (spherical aberration, astigmatism, and distortion) in the second numerical example. The aberrations are provided for the d-line. In a diagram of spherical aberration, the solid line shows the d-line, the broken line shows the C-line, the one-dot chain line shows the g-line. In a diagram of astigmatism, the solid line and the broken line show aberration for a sagittal image plane and aberration for a tangential image plane, respectively.

As is evident from the above tables and aberration diagrams, a compact size and a wide angle of view of 64° or more are achieved and the aberrations are properly corrected in the second numerical example.

Table 5 shows the values in the first and second numerical examples corresponding to the above-described Conditional Expressions A0, A1, A2, A3, A4, and A5.

Table 5

| | First Example | Second Example |
|---|---|---|
| A0 | 0.330172 | 0.2818463 |
| A1 | -1.31306 | -1.450569 |
| A2 | 0.009875 | 0.0099472 |

(continued)

|  | First Example | Second Example |
|---|---|---|
| A3 | 0.0796 | 0.07863 |
| A4 | 0.066 | 0.072 |
| A5 | 0.97 | 1.00 |

Table 5 shows that both the first and second numerical examples satisfy Conditional Expressions A0, A1, A2, A3, A4, and A5.

An imaging device according to an embodiment of the present invention will now be described.

The imaging device according to the embodiment of the present invention includes an imaging lens and an image pickup element that converts an optical image formed by the imaging lens into electric signals. To the imaging lens, the above-described imaging lens according to the embodiment of the present invention can be applied.

Therefore, the imaging device according to the embodiment of the present invention can be compact, achieves a wide angle of view, and obtains an image properly corrected for distortion.

In particular, since the imaging device is compact, it is suitably applied to a small image capturing device such as a camera module of a mobile telephone or a camera module of a PDA (Personal Digital Assistant).

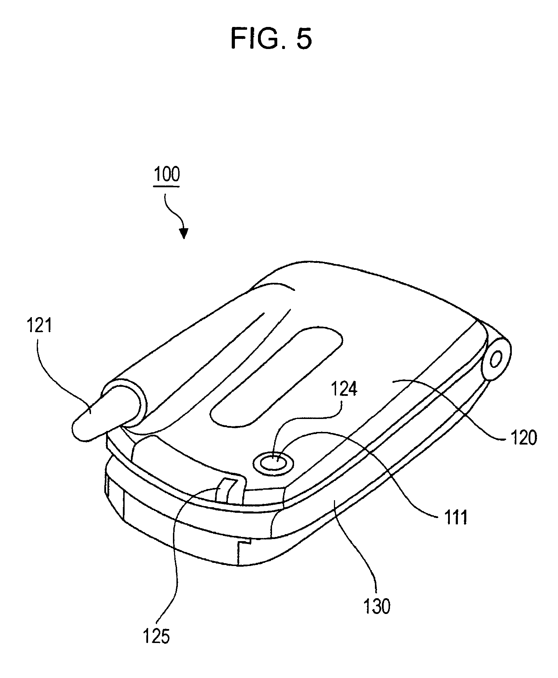

Figs. 5 to 7 show an embodiment in which the imaging device of the present invention is applied to a camera unit of a mobile telephone.

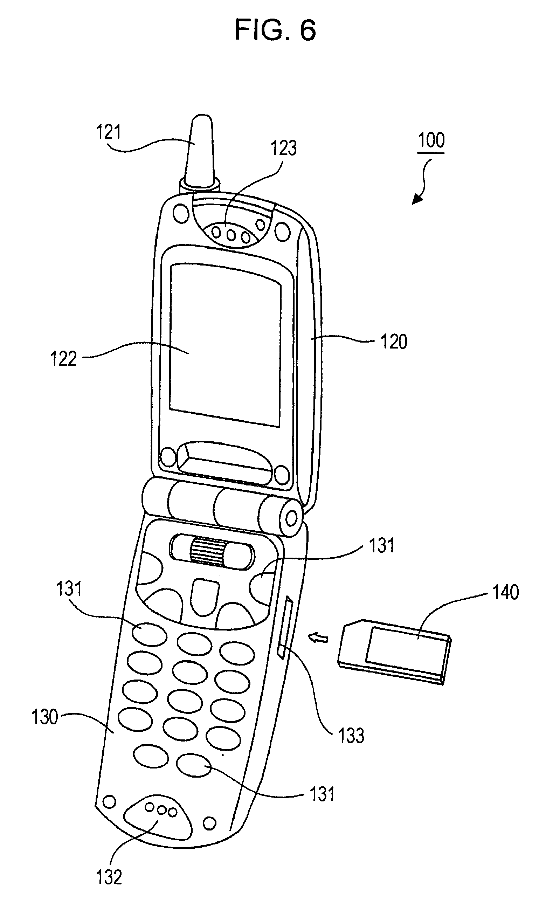

Figs. 5 and 6 show the outward appearance of a mobile telephone 100.

In the mobile telephone 100, a display unit 120 and a main unit 130 are joined so that the mobile telephone 100 can fold at the center hinge portion. The mobile telephone 100 is folded when carried, as shown in Fig. 5. During use for conversation or for other purposes, the display unit 120 and the main unit 130 are open, as shown in Fig. 6.

A retractable antenna 121 is provided at a position on one side of a back surface of the display unit 120. The antenna 121 is used to exchange electric waves with a base station. On an inner surface of the display unit 120, a liquid crystal display panel 122 is provided. The liquid crystal display panel 122 has a size such as to occupy almost the entire inner surface. A speaker 123 is provided above the liquid crystal display panel 122. The display unit 120 also includes an imaging unit 110 of a digital camera unit. An imaging lens 111 of the imaging unit 110 faces outward through a window 124 provided in the back surface of the display unit 120. Herein, the term "imaging unit" refers to a unit including the imaging lens 111 and an image pickup element 112. In other words, the concept of "imaging unit" is used to clarify that both the imaging lens 111 and the image pickup element 112 are provided in the display unit 120, but other components of the digital camera unit, for example, a camera control unit and a recording medium, may be provided in the main unit 130. As the image pickup element 112, for example, a photoelectric conversion element, such as a CCD or a CMOS, can be adopted. Further, as the imaging lens 111, the above-described imaging lens according to the embodiment of the present invention, and an imaging lens carried out by an embodiment other than the embodiments described in this specification can be adopted.

An infrared communication unit 125 is provided at the leading end of the display unit 120. Although not shown, the infrared communication unit 125 includes an infrared light emitting element and an infrared light receiving element.

On an inner surface of the main unit 130, operation keys 131, such as numeric keys 0 to 9, a calling key, and a power key, are provided. A microphone 132 is provided below the operation keys 131. A memory card slot 133 is provided in a side face of the main unit 130. Through the memory card slot 133, a memory card 140 can be inserted into and removed from the main unit 130.

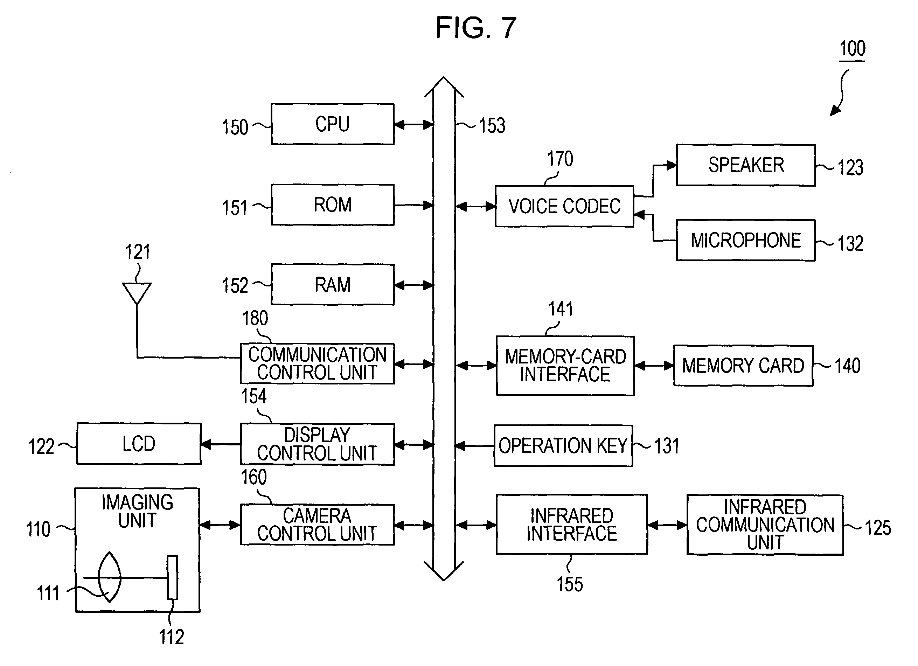

Fig. 7 is a block diagram showing the configuration of the mobile telephone 100.

The mobile telephone 100 includes a CPU (Central Processing Unit) 150 that controls the entire operation of the mobile telephone 100. In other words, the CPU 150 loads a control program stored in a ROM (Read Only Memory) 151 into a RAM (Random Access Memory) 152, and controls the operation of the mobile telephone 100 via a bus 153.

A camera control unit 160 controls the imaging unit 110 including the imaging lens 111 and the image pickup element 112 so as to take still pictures, motion pictures, etc. After compressing obtained image information, for example, in a JPEG or MPEG format, the camera control unit 160 places the image information onto the bus 153. The image information placed on the bus 153 is temporarily stored in the RAM 152. As necessary, the image information is output to a memory-card interface 141, is stored in the memory card 140 by a memory-card interface 141, or is displayed on the liquid crystal display panel 122 via a display control unit 154. Voice information simultaneously obtained via the microphone 132 in an image taking operation is temporarily stored in the RAM 152 via a voice codec 170 together with the image information, or is stored in the memory card 140. Alternatively, the voice information is output from the speaker 123 via the voice codec 170 simultaneously with the image display on the liquid crystal display panel 122. Further, as necessary, the image information and the voice information are output to an infrared interface 155, and are then output to external information apparatuses having a similar infrared communication unit, for example, a mobile telephone, a personal computer, or a PDA, via the infrared communication unit 125 by the infrared interface 155. In order to display a motion picture or a still picture on the liquid crystal display panel 122 on the basis of image information stored in the RAM 152 or the memory card 140, image data obtained by decoding or decompressing a file stored in the RAM 152 or the memory card 140 is sent to the display control unit 154 via the bus 153.

A communication control unit 180 exchanges electric waves with a base station via the antenna 121. In a voice communication mode, the communication control unit 180 processes received voice information and outputs the voice information to the speaker 123 via the voice codec 170, or receives voice collected by the microphone 132 via the voice codec 170, and transmits the voice after predetermined processing.

Since the size of the above-described imaging lens 111 in the direction of the optical axis of incident light can be made small, the imaging lens 111 can be easily mounted even in an apparatus having a limited thickness, like the mobile telephone 100. Moreover, since a lot of information can be obtained from a high-quality image, the imaging lens 111 is suitable for use in a mobile telephone serving as a portable information apparatus.

It should be noted that the specific structures, shapes, and numerical values described in the above embodiments and numerical examples are merely examples for implementing the present invention, and that the technical scope of the present invention is not restrictively interpreted by these examples.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1. An imaging lens comprising:

   three resin lenses configured to form an image in a solid-state image pickup element;
   an aperture stop; and
   one infrared cut filter formed of resin,

   wherein the three resin lenses include a first lens formed by a positive lens that is convex on an object side, a second lens formed by a negative lens that is convex on an image side, and a third lens formed by a positive lens that is concave on the image side,
   wherein the first lens, the aperture stop, the second lens, and the third lens, and the infrared cut filter are arranged in that order from the object side,
   wherein surfaces of the first lens, the second lens, and the third lens are aspherical, and
   wherein the imaging lens has an angle of view of 64° or more, and satisfies the following conditional expressions A0 to A3:

$$0.2 < R1/R2 < 0.35 \qquad (A0)$$

$$-1.2 < R1/R5 < -1.5 \qquad (A1)$$

$$0.002 < |D4/f2| < 0.01 \qquad (A2)$$

$$0.06f < Z0.50 - Z0.35 < 0.08f \qquad (A3)$$

where f represents the focal length of the entire system, f2 represents the focal length of the second lens, R1 represents the paraxial radius of curvature of an object-side surface of the first lens, R2 represents the paraxial radius of curvature of an image-side surface of the first lens, R5 represents the paraxial radius of curvature of an image-side surface of the second lens, D4 represents the thickness of the second lens, Z0.50 represents the sag amount of an image-side surface of the third lens at a ray height of 0.50 with respect to a ray height of 1.0 indicating the maximum ray height provided when the angle of view is 64°, and Z0.35 represents the sag amount of the image-side surface of the third lens at a ray height of 0.35 with respect to the ray height of 1.0 indicating the maximum ray height provided when the angle of view is 64°.

2. The imaging lens according to claim 1, wherein the following conditional expressions A4 and A5 are satisfied:

$$0.05 < f/f3 < 0.1 \qquad (A4)$$

$$0.97 < D77/D73 < 1.03 \qquad (A5)$$

where f3 represents the focal length of the third lens, D73 represents the lens thickness at a ray height of 0.30 with respect to a ray height of 1.0 indicating the ray height at the image-side surface of the third lens when the angle of view of a ray incident on the first lens is 64°, and D77 represents the lens thickness at a ray height of 0.70 with respect to the ray height of 1.0 indicating the ray height at the image-side surface of the third lens when the angle of view of the ray incident on the first lens is 64°.

3. An imaging device comprising:

an imaging lens; and
an image pickup element configured to convert an optical image formed by the imaging lens into electric signals,

wherein the imaging lens includes three resin lenses, an aperture stop, and one infrared cut filter formed of resin, wherein the three resin lenses include a first lens formed by a positive lens that is convex on an object side, a second lens formed by a negative lens that is convex on an image side, and a third lens formed by a positive lens that is concave on the image side,
wherein the first lens, the aperture stop, the second lens, and the third lens, and the infrared cut filter are arranged in that order from the object side,
wherein surfaces of the first lens, the second lens, and the third lens are aspherical, and
wherein the imaging lens has an angle of view of 64° or more, and satisfies the following conditional expressions A0 to A3:

$$0.2 < R1/R2 < 0.35 \qquad (A0)$$

$$-1.2 < R1/R5 < -1.5 \qquad (A1)$$

$$0.002 < |D4/f2| < 0.01 \qquad (A2)$$

$$0.06f < Z0.50-Z0.35 < 0.08f \qquad (A3)$$

where f represents the focal length of the entire system, f2 represents the focal length of the second lens, R1 represents the paraxial radius of curvature of an object-side surface of the first lens, R2 represents the paraxial radius of curvature of an image-side surface of the first lens, R5 represents the paraxial radius of curvature of an image-side surface of the second lens, D4 represents the thickness of the second lens, Z0.50 represents the sag amount of an image-side surface of the third lens at a ray height of 0.50 with respect to a ray height of 1.0 indicating the maximum ray height provided when the angle of view is 64°, and Z0.35 represents the sag amount of the image-side surface of the third lens at a ray height of 0.35 with respect to the ray height of 1.0 indicating the maximum ray height provided when the angle of view is 64°.

# FIG. 1

# FIG. 2

| LONGITUDINAL SPHERICAL ABERRATION | ASTIGMATIC FIELD CURVES | DISTORTION |
|---|---|---|

FOCUS (mm)          FOCUS (mm)          DISTORTION %

# FIG. 3

# FIG. 4

LONGITUDINAL
SPHERICAL ABERRATION

ASTIGMATIC
FIELD CURVES

DISTORTION

# FIG. 5

# FIG. 6

## FIG. 7

**EP 2 051 121 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001272598 A
- JP 2005024823 A
- JP 2005258181 A